# NEW EUROPEAN PATENT SPECIFICATION

(11) **EP 1 914 937 B2**
(45) Date of publication and mention of the opposition decision: **23.01.2013**
(45) Mention of the grant of the patent: 28.10.2009
(21) Application number: 06761564.1
(22) Date of filing: 25.07.2006
(51) Int. Cl.: H04L 12/24, H04L 29/06

(54) **METHOD AND SYSTEM FOR REALIZING IMS NETWORK RELIABILITY**
VERFAHREN UND SYSTEM ZUM REALISIEREN VON IMS-NETZWERKZUVERLÄSSIGKEIT
PROCEDE ET SYSTEME PERMETTANT D'OBTENIR LA FIABILITE D'UN RESEAU IMS

(30) Priority: 27.07.2005 CN 200510085400
(43) Date of publication of application: 23.04.2008
(73) Proprietor: Huawei Technologies Co., Ltd., Longgang District, Shenzhen Guangdong 518129 (CN)
(72) Inventor: WEN, Kai, Huawei Administration Building, Shenzhen, Guangdong 518129 (CN); GU, Jiongjiong, Huawei Administration Building, Shenzhen, Guangdong 518129 (CN)
(74) Representative: Pfenning, Meinig & Partner GbR
(86) International application number: PCT/CN2006/001834
(87) International publication number: WO 2007/012270

(56) References cited:
- WO-A1-03/061236
- WO-A1-03/084257
- WO-A1-2004/084510
- WO-A1-2004/089023

## Description

### Field of the Invention

The present invention relates to IP Multimedia Subsystem (IMS) technologies in the communication field, and in particular to a method and system for implementing IMS network reliability.

### Background of the Invention

The IMS, a core session control layer of a fixed network and a mobile network, has become a focus in the industry at present, and numerous IMS related specifications, including those on network architectures, interfaces, protocols, etc., are defined in the standards of 3GPP and TISPAN. The SIP protocol is used as call control signaling of the IMS. In an IMS network, subscription data of an IMS user is managed centrally by a Home Subscriber Server (HSS), services are provided by an Application Server (AS), and session control is accomplished by a Serving-Call Session Control Function (S-CSCF) which is separated from the AS structurally in the network. The service is triggered through the S-CSCF to the AS for processing, and a plurality of ASs may coordinate with each other. A user may access the IMS through a current local proxy node, i.e. the Proxy-Call Session Control Function (P-CSCF), and session control and service control are accomplished by a serving node in a home domain of the registration location of the user, so that the user may be provided with the same service at different access points. In the IMS network, the service management, session control and a bearer access are separate and the service provision is independent of the access and the location.

Generally, a reliability mechanism is provided in each IMS network device. For example, a network device typically consists of a plurality of processing cards, among which an active-backup relationship is established, a service is provided by the active card, and when the active card fails, the corresponding backup board is switched to an active state to take the responsibility of the failed card, thereby ensuring continuity of service provision.

Operators are also concerned with a disaster recovery capability of the network in addition to the reliability mechanism within the device. The IMS network includes the above various network entities interrelated strongly, and a challenge in the art of "IMS networking reliability" is to minimize, when a network device fails, the influence of the failure of the network device upon the whole IMS network and the users.

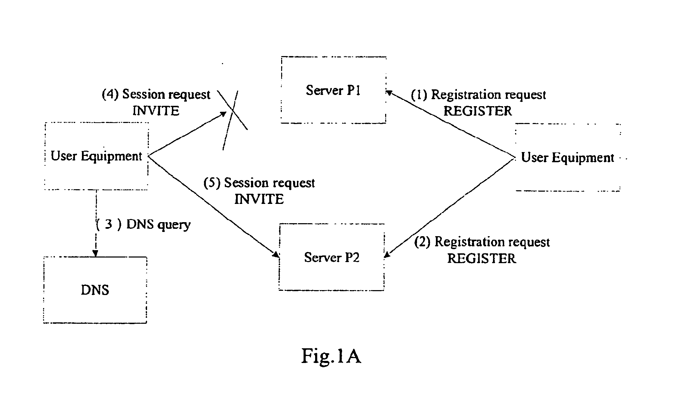

The IMS network is based upon the SIP protocol, and the RFC3263 (Locating SIP Servers) describes in connection with related demands for SIP network reliability how to locate a next-hop SIP server by interrogating a Domain Name Server (DNS). With such a mechanism, when an entity on a SIP message path fails, a message is transported to a backup entity corresponding to the failed entity. As illustrated in Figure 1A, through the resolution by the DNS, a user may obtain addresses of network entities P1 and P2 and realize that a priority level of the network entity P1 is higher than that of the network entity P2. When the network entity P1 fails, the user may send a call request to the backup network entity P2 with a lower priority level.

This mechanism may be applied in an IMS system to handle the message forwarding in the case that an Interrogating-Call Session Control Function (I-CSCF) fails. In other words, when a certain I-CSCF fails, a message is forwarded to another I-CSCF. However, this mechanism is useless when the P-CSCF or the S-CSCF fails, because a user service-related state is stored in the P-CSCF or the S-CSCF, and another P-CSCF or S-CSCF without state related data can not process a received message even though the message can be forwarded thereto.

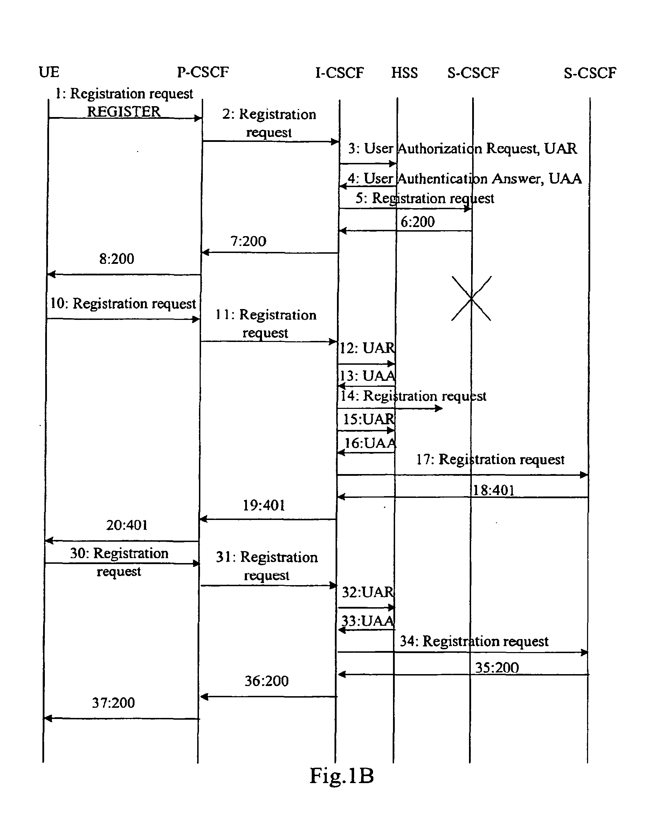

Further, procedures for user registration and re-registration are described in the 3GPP TS23228. A method for implementing IMS network reliability by using the existing user registration/re-registration flow is as illustrated in Figure 1B, where a 200 response indicative of successful registration sent by the S-CSCF to a User Equipment carries an interval of time for the re-registration to be initiated by the User Equipment, and the User Equipment initiates the re-registration before the interval of time expires. The I-CSCF routes a re-registration request REGISTER to the S-CSCF with which the user has registered. When the S-CSCF with which the user has registered fails, the I-CSCF obtains from the HSS a set of S-CSCF capabilities requested by the user, reselects an S-CSCF in accordance with information on the set of S-CSCF capabilities and routes the re-registration request REGISTER to the newly selected S-CSCF. The newly selected S-CSCF considers the re-registration request REGISTER as a new user registration request, responds with a 401 response to authenticate the user and responds with a 200 response indicating of successful registration upon successful authentication.

Therefore, during registration or re-registration of the user, when the S-CSCF serving the user fails, it is ensured that a new S-CSCF can proceed with provision of the subsequent service requested by the user through the process in which the I-CSCF reselects the S-CSCF.

As specified by the 3GPP, the interval of time for re-registration of the User Equipment (UE) in the 200 response indicative of successful registration returned from the S-CSCF to the User Equipment is 600, 000 seconds (approximately one week). It will be appreciated that the S-CSCF may also decide to shorten the interval of time for re-registration of the user in accordance with a local policy. However if the interval of time for re-registration of the user is excessively short, excessive re-registration messages may be generated, so that network resources and radio air interface resources are occupied. The default interval of time for registration is 7,200 seconds in the RFC3261.

During the period of time since a user registers successfully to the user initiates re-registration, the user may not be served if the corresponding S-CSCF fails. For example, the user may not receive an incoming call during this period of time. The network load may be increased and excessive network resources may be occupied, if the interval of time for re-registration of the user is shortened for the purpose of reducing the user service interruption time in the case that the S-CSCF fails. Further, the above solution may be only applicable to the case that the S-CSCF fails but not to the case that other IMS network entities such as the P-CSCF entity and the like fail.
WO 03084257A1 discloses a method and system for authentication of a mobile device, in which if a network element detects an incorrect event related to a mobile device, the network element causes the re-authenticate of the mobile device in response to the detected incorrect event.
WO 03061236A1 discloses a method and system for changing a subscription information of a subscriber in an Internet Protocol (IP) multimedia sub-system environment.

### Summary of the Invention

The invention provides a method according to claim 1 and a system according to claim 20 for implementing IMS network reliability to avoid a long interruption of user service caused by the failure of a network entity during a period of time from successful registration of a user to initiation of re-registration of the user in the existing IMS.

The invention provides the following technical solutions.

A method for implementing IMS network reliability includes the steps of:

perceiving, by a first network entity in an IMS network, whether a second network entity in which user registration related data is stored fails; and

instructing, by the first network entity, a registered user related to the failed second network entity to re-register upon perceiving a failure of the second network entity.

Whether the second network entity fails is detected manually, and when the second network entity is determined as failed, a command is issued to notify the first network entity of the failure; or the first network entity perceives whether the second network entity fails through subscribing to a state of the second network entity from a heartbeat server in the IMS network which detects a state of network device.

A User Equipment subscribes to a state of the second network entity from the first network entity, which instructs the User Equipment to re-register in accordance with the maintained subscription relationship upon perceiving the failure of the second network entity.

Through a registration state event package subscribed to by the User Equipment, the first network entity instructs the User Equipment to re-register.

During registration of users, identifiers of the users and an identifier of the network entity in which the user registration related data is stored are associated and stored at a designated network entity, and the first network entity determines the registered users related to the failed second network entity through the designated network entity and issues a notification to the users to request the user to re-register.

The first network entity is a device management server in the OMA device management architecture, and the device management server sends an extended notification message to instruct the User Equipment to reinitiate registration.

The second network entity includes a Proxy-Call Session Control Function (P-CSCF); the first network entity is an S-CSCF, and an identifier of the P-CSCF and identifiers of the related users are associated and stored at the S-CSCF during registration of the users; and the S-CSCF instructs the related users to re-register upon perceiving failure of the P-CSCF.

The second network entity includes a Proxy-Call Session Control Function; the first network entity is another P-CSCF; and an identifier of the P-CSCF and identifiers of the related users are associated and stored at the another P-CSCF during registration of the users, and the another P-CSCF instructs the influenced users to re-register upon failure of the P-CSCF.

The second network entity includes an S-CSCF. When the S-CSCF fails, the first network entity instructs a user to re-register through a P-CSCF which serves the user during registration of the user. The first network entity is another S-CSCF, and during registration of the user, an identifier of the user, identifier information of the P-CSCF serving the user and an identifier of the S-CSCF are associated and stored at the Home Subscriber Server; and the another S-CSCF perceives the related user and the P-CSCF serving the user from the HSS in accordance with the identifier information of the S-CSCF.

The second network entity includes an HSS; and the first network entity is an S-CSCF. Upon perceiving failure of the HSS, the S-CSCF instructs a user registered with the HSS to re-register through a P-CSCF which serves the user during registration of the user.

The second network entity includes an Application Server (AS). Upon failure of the AS, the first network entity instructs a user to re-register through a P-CSCF which serves the user during registration of the user. The first network entity is an S-CSCF.

Upon receipt of a notification message for re-registration, a User Equipment checks a source address of the notification message with an address of a P-CSCF obtained in advance, so as to determine whether the notification message is authentic, and then initiates re-registration to the network upon determining that the notification message is authentic.

After receiving a notification message for re-registration, a User Equipment carries an authentication challenge in a response message. A network entity sending the notification message generates a corresponding authentication answer in accordance with the authentication challenge and sends the authentication answer to the User Equipment, and the User Equipment checks the authentication answer to determine whether the notification message is authentic and initiates re-registration to the network upon determining that the notification message is authentic.

A method for perceiving a change of a state of a network entity in an IMS network includes the steps of:

subscribing to a change of a state of a monitored network entity from a heartbeat server in an IMS network, wherein the heartbeat server detects the state of the network entity by sending a SIP message to and receiving a corresponding response message from the network entity; and

maintaining, by the heartbeat server, the subscription relationship and notifying the subscriber upon detection of a change of the state of the monitored network entity.

The heartbeat server and the monitored network entity count respectively the sent and received SIP messages. The monitored network entity carries a count result in the response message sent to the heartbeat server, which compares the count results of the heartbeat server and the monitored network entity to determine whether the state of the monitored network entity changes.

According to the invention, upon failure of the P-CSCF or the S-CSCF in the IMS network, the user may be instructed timely through a backup network entity to re-register, thereby the interruption duration of a user service may be shortened greatly and reliability of the network is improved.

### Brief Description of the Drawings

Figure 1A is a schematic diagram of locating a server through interrogating an DNS in the prior art;

Figure 1B is a flow chart of implementing IMS network reliability through user registration/re-registration in the prior art;

Figure 2 is a schematic diagram showing concurrent failures of network entities at the same location;

Figures 3A and 3B are flow charts of instructing a User Equipment to re-register upon failures of an S-CSCF and a P-CSCF respectively according to the invention;

Figure 4 is a schematic diagram showing network devices involved in user registration;

Figure 5 is a processing flow chart showing that the User Equipment subscribes to a registration state event and a corresponding event notification;

Figures 6A and 6B are flow charts of authenticating a User Equipment when the User Equipment receives a re-registration notification;

Figures 7A and 7B are flow charts of detecting a state of a network device through a heartbeat server; and

Figure 8 is a flow chart of subscribing to a device state from the heartbeat server.

### Detailed Description of the Invention

In order to avoid that a long interruption of user service might be caused by a failure of a network entity during a period of time from successful registration of a user to initiation of re-registration of the user in the existing IMS, a first network entity in an IMS network perceives whether a second network entity on which user registration related data is stored fails, and instructs a registered user related to the failed second network entity to re-register upon perceiving a failure of the second network entity according to the invention.

The "failure/fail" as referred to herein means a case that a network device restarts upon a failure or is damaged completely due to an incontrollable factor.

The second entity in the network on which the user registration related data is stored includes a Proxy-Call Session Control Entity, a Serving-Call Session Control Entity, a Home Subscriber Server, an Application Server, etc. The logic function of the first network entity which instructs the user to re-register may be accomplished by an existing entity in the IMS network which is associated with the second network entity, and it will be appreciated that the logic function may also be accomplished by a dedicated network entity.

During notifying a user influenced by a failure of the second network entity, the first network entity needs to determine accurately the influenced user corresponding to the failed network entity. Therefore according to the invention, an identifier of the network device related to a registered user is stored on a designated network entity in the IMS network during registration of the user, and the first network entity may obtain information required for instructing the user to re-register from the designated network entity when the second network entity fails. The identifier of the network entity may be a name of the network entity or an address of the network entity.

Upon registration of the User Equipment, the Serving-Call Session Control Function downloads user subscription data from the HSS and stores user registration state related information such as Contact, PATH. When the S-CSCF fails, a user who registers with the S-CSCF is unable to act as a caller to initiate a call. In this case, the user may attempt to re-register on his/her own initiative, the I-CSCF selects an S-CSCF in a normal state during the registration, and the service is carried on upon successful registration. However, a user misses all incoming call traffic if the user is in a standby state, and the service may be recovered only if the user initiates re-registration and registers with the S-CSCF in a normal state after a re-registration timer expires.

In view of the case that a user may not be provided with the service in a period of time after the S-CSCF fails, the invention adopts a method in which the first network entity sends to the influenced user a notification to request the User Equipment to re-register, so as to proceed with the user service. When the User Equipment registers with the S-CSCF through the P-CSCF, the S-CSCF associates information on an identifier of the user and information on identifiers of the S-CSCF and the corresponding P-CSCF and stores it at a designated network entity. Upon detection of a failure of the S-CSCF, the first network entity of the S-CSCF obtains the identifier of the influenced user and the identifier of the corresponding P-CSCF from the designated network entity in accordance with the identifier information on the failed S-CSCF, and instructs through the corresponding P-CSCF the influenced user to re-register.

The user registration related data (e.g., SA) stored by the P-CSCF is lost when the P-CSCF fails, and the User Equipment can neither initiate nor receive a call. When being not able to initiate a call, the user can reinitiate registration through another P-CSCF to proceed with a calling service. If the user is in a standby state, the User Equipment can not perceive the failure of the P-CSCF until a re-registration timer expires, and thus the user may miss all incoming calls previous to the discovery.

In view of the failure of the P-CSCF, the invention adopts the method in which the first network entity sends to the influenced user a notification to request the user to re-register so as to proceed with provision of the service for the user. The User Equipment registers with the S-CSCF through the P-CSCF, and the first network entity of the P-CSCF can be the corresponding S-CSCF.

The User Equipment registers with the S-CSCF through the P-CSCF, which delivers its own address to the S-CSCF via a header field PATH. In addition, the P-CSCF also delivers information on the identifier of the related P-CSCF, and the S-CSCF stores the address of the P-CSCF and an address of the related P-CSCF in user registration data. Upon detection of a failure of the P-CSCF, the S-CSCF perceives the influenced user from its stored user registration data in accordance with the identifier of the failed P-CSCF and sends a notification to the User Equipment through the related P-CSCF whose address is stored in the user registration data.

In view of a failure of the P-CSCF, the first network entity device located in the same roaming domain as the failed P-CSCF may also be used to notify on its own initiative the user in the invention, and the user re-registers to proceed with the service.
For example, the first network entity is another P-CSCF in the same IMS roaming domain as the failed P-CSCF. Upon perceiving a failure of the P-CSCF, the first network entity sends a notification to the user, and the user re-registers upon receipt of the notification so as to proceed with the service. In deployment of an IMS network, a home domain and a roaming domain of a user typically do not belong to the same operator. In this way, the failure of a network device in the roaming domain is handled by the operator of the roaming domain, thereby avoiding coupling between different operators.

During registration of a user, the HSS also stores user registration related data, typically a user registration state and an S-CSCF assigned for the user are recorded. If the HSS fails, the subsequent user service is influenced. For example, in a normal situation with the user acting as a called party, the I-CSCF in the home domain of the called party interrogates the HSS so as to decide to route a call request to the corresponding S-CSCF; when the HSS fails, the I-CSCF can not determine the S-CSCF with which the called party has registered currently, causing the user to be not able to receive an incoming call.

In view of the failure of the HSS, the invention may also adopt the method in which the first network entity instructs the influenced user to re-register so as to proceed with provision of the service for the user. The first network device may be an S-CSCF. In the case that a plurality of HSSs present in the home domain, the S-CSCF entity interacts with an SLF via a Dx interface to determine an HSS corresponding to the registered user and records an address of the HSS corresponding to the registered user in user registration data. When a certain HSS fails, all S-CSCF in the home domain send respectively, in accordance with their own correspondence relationships stored between the registered users and the HSS, a notification to User Equipments influenced by the failure of the HSS. In the case that only one HSS presents in the home domain, the S-CSCF sends a notification to all registered users upon a failure of the HSS.

During registration of a user, some ASs providing a service for the user store user registration related data. For example, for an AS providing an online state service for a user, the S-CSCF initiates third-party registration with the AS upon registration of the user in accordance with an initial filtering rule of the user, and thus the AS knows that the user has registered and is reachable.

The AS which stores the user registration related data can not provide the corresponding service for the user upon a failure. If a normal use by the user is influenced without provision of the corresponding service, the operator allows the first network entity to send a notification to the influenced User Equipment, and the User Equipment is provided with the service after re-registration. The first network entity can be an S-CSCF. Upon a failure of an AS, the S-CSCF checks its own stored registration user data and sends a notification to all User Equipments involved in the failure of the AS; the User Equipments re-register upon receipt of the notification, and during the re-registration of the User Equipments, the S-CSCF chooses to initiate third-party registration with another AS capable of providing the same service.

The first network entity sends a notification to User Equipments in sequence upon a failure of a network device. During this procedure, if a User Equipment influenced by the failure of the network device has re-registered due to failing to initiate a call normally, but the first network entity does not know this, the User Equipment still receives a corresponding re-registration notification, causing the equipment to re-register once again; however, this causes no error.

The above methods of processing in cases that the various network devices which store user registration related data fail can be applied separately or in combination. Dependent upon practical networking of the IMS network, for example, the inventive method is applied to instruct a user to re-register only in the case that an S-CSCF fails while another method for implementing network reliability is adopted in the case that a P-CSCF fails.

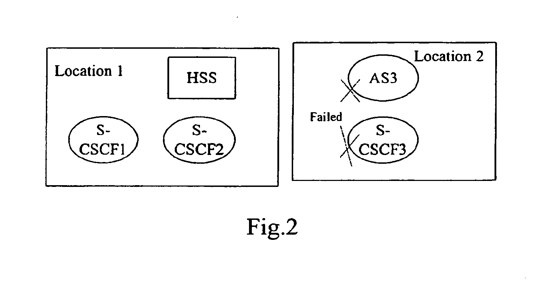

The methods in view of failures of various network devices as described above may also be applied in the same IMS network. For example, the first network entity notifies a related user upon a failure of either an AS or an S-CSCF. As illustrated in Figure 2, when both an AS3 and an S-CSCF3 at a location 2 fail, an S-CSCF1 and an S-CSCF2 acting as the first network entities of the S-CSCF3 obtain users influenced by the failure of the S-CSCF3 from an HSS and send a notification to these User Equipments. The S-CSCF1, the S-CSCF2 and the S-CSCF3 acting as the first network entities of the AS3 should check respectively which one(s) among the users they serving is(are) provided by the AS3 with a service, and send a notification to the corresponding User Equipment(s). It will be understood that although the S-CSCF3 fails and can not act as the first network entity to issue a notification to related users, the S-CSCF1 and the S-CSCF2 acting as the first network entities of the S-CSCF3 have sent a notification to all User Equipments which have originally registered with the S-CSCF3, and the users influenced by the failure of the AS3 may also be included.

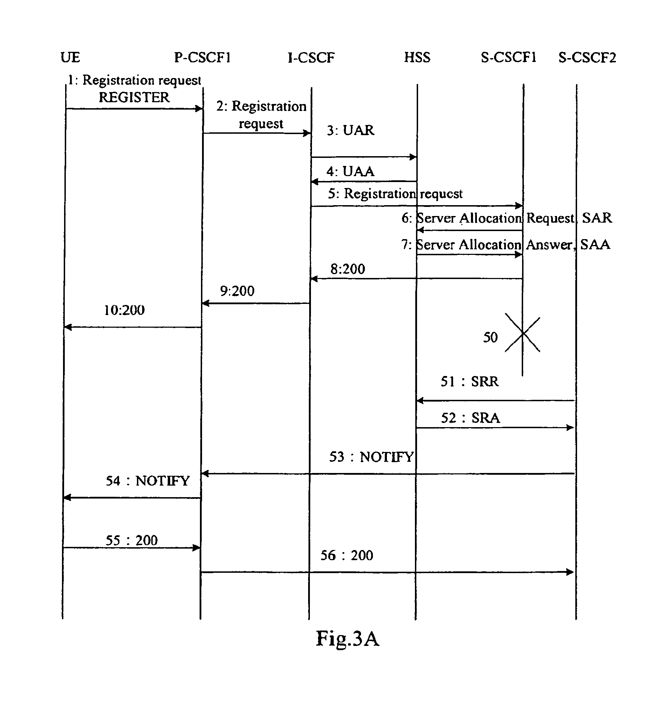

With reference to Figure 3A, a processing flow chart of instructing a User Equipment to re-register upon a failure of an S-CSCF is as follows (authentication of the user is omitted herein).

Steps 1-2: The User Equipment (UE) sends a registration request REGISTER to the home domain through a P-CSCF1.

Steps 3-5: The I-CSCF interacts with the HSS and forwards the registration request REGISTER to the corresponding S-CSCF1.

Steps 6-7: The S-CSCF1 accepts registration of the user after authenticating the registration request. The S-CSCF1 stores, in registration data of the user, the address of the P-CSCF1 in the header field PATH. In compliance with 3GPP protocol flow, the S-CCSCF1 interacts with the HSS through a Server Allocation Request/Server Allocation Answer (SAR/SAA) to notify the HSS about the name of the S-CSCF1 serving the registered user and to download user subscription data. In the invention, the SAR also carries the address of the P-CSCF1 serving the corresponding registered user, and correspondence association between the registered user and the S-CSCF1, and that between the registered user and the P-CSCF1 are stored in the HSS.

Steps 8-10: The S-CSCF1 returns to the User Equipment a 200 response indicating successful registration.

Step 50: The S-CSCF1 fails.

Steps 51-52: In the invention, the S-CSCF2 sends to the HSS a Service Restore Request (SRR) containing the identifier of the S-CSCF1 upon perceiving a failure of the S-CSCF1. The HSS returns in a Service Restore Answer (SRA) the related information (including the identifier of the user and the address of the corresponding P-CSCF1) on the user who has registered with the S-CSCF1. After the user related information is sent to the S-CSCF2 in the SRA, the HSS removes the registration state information related to the user. The SRR and the SRA are a flow newly added in the invention.

Steps 53-56: The S-CSCF2 obtains the related information from the HSS and sends a NOTIFY to the user who has registered with the S-CSCF1 to instruct the user to re-register. The notification is sent to the User Equipment through the corresponding P-CSCF serving the User Equipment.

The first network entity of the S-CSCF1 is not limited to only the S-CSCF2 in the above flow. For example, the first network entity may also include the S-CSCF3, an S-CSCF4, etc. The HSS configures correspondence relationships between the S-CSCF1 and the corresponding first network entities, and another S-CSCF entity may be allowed to interact with the HSS through an SRR/SRA to obtain the related information on the user who has registered with the S-CSCF1 entity if only the another S-CSCF is among the first network entities of the S-CSCF1. Upon receipt of SRRs from a plurality of first network entities, the HSS can distribute uniformly the information on users who has registered with the S-CSCF1 entity among the first network entities. These S-CSCFs acting as first network entities send concurrently a re-registration notification to users, to accelerate the notification speed and make the network load more uniform.

The HSS may also configure importance levels of users and send preferentially the related data of users with a higher importance level to the S-CSCF acting as the first network entity, so that these users can be notified preferentially.

In the above flow, the logic function accomplished by the first network entity can be present in the S-CSCF and may also be present in another type of network entity such as an AS.

Further, the first network entity of the S-CSCF may also be a network device in the roaming domain, such as the P-CSCF. Upon perceiving a failure of the S-CSCF, the P-CSCF instructs the related influenced UE to reinitiate registration.

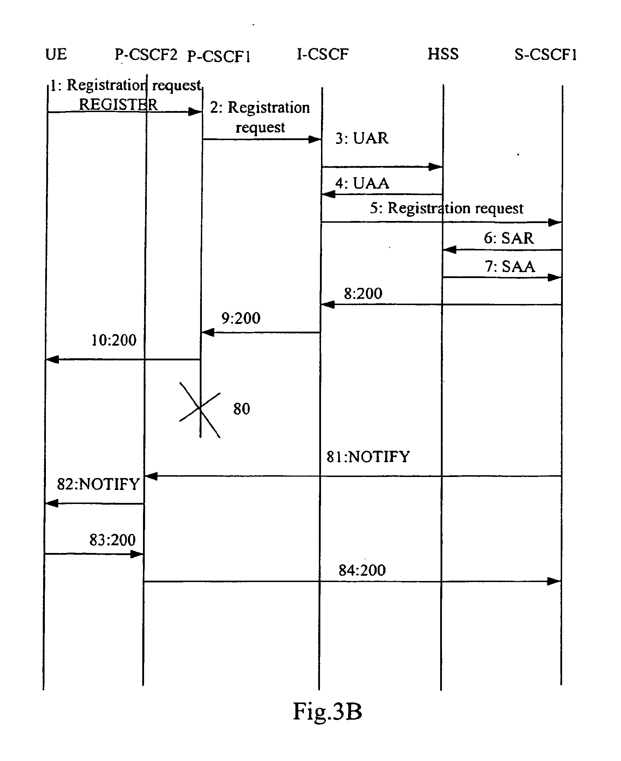

With reference to Figure 3B, a processing flow chart of instructing a User Equipment to re-register upon a failure of a P-CSCF is as follows (authentication of the user is omitted herein).

Steps 1-2: The User Equipment (UE) sends a registration request REGISTER to the home domain through the P-CSCF1. In the invention, the P-CSCF1 is configured with the address of a P-CSCF2 related thereto (a notification request message reaches the User Equipment through the P-CSCF2 functioning as a path upon a failure of the P-CSCF1). The P-CSCF1 contains its own address in an added header field PATH, and a further new parameter for carrying the address of the P-CSCF2 is added in the header field PATH.

Steps 3-5: The I-CSCF interacts with the HSS and forwards the registration request REGISTER to the corresponding S-CSCF1.

Steps 6-7: The S-CSCF1 accepts registration of the user after authenticating the registration request. The S-CSCF1 stores in user registration data the address of the P-CSCF1 in the header field PATH and also the address of the P-CSCF2 associated with the P-CSCF1.

Steps 8-10: The S-CSCF1 returns to the User Equipment with a 200 response indicating successful registration.

Step 80: The P-CSCF1 fails.

Steps 81-82: The S-CSCF1 perceives the failure of the P-CSCF1, and determines which users are influenced by the failure of the P-CSCF1 in accordance with the user registration data stored at the S-CSCF1; with the use of the stored address of the P-CSCF2 associated with the P-CSCF1, a NOTIFY sent to these users reaches User Equipments, so as to instruct the User Equipments to re-register.

Steps 83-84: The User Equipment returns a 200 response.

The P-CSCF2 associated with the P-CSCF1 refers to one which, upon receiving a request message destined for a UE which has originally registered through the P-CSCF1, can send the request message to the UE, and in this case the P-CSCF2 and the P-CSCF1 are at least required to be located within the same IP address domain.

The first network entity of the P-CSCF1 is the S-CSCF in the above flow. In the invention, the first network entity of the P-CSCF1 may also be another network device. For example, the P-CSCF2 may also act as the first network entity of the P-CSCF1. After the User Equipment registers successfully through the P-CSCF1, the P-CSCF1 notifies the P-CSCF2 about the identifier of the user who has registered successfully through the P-CSCF1. Upon a failure of the P-CSCF1, the P-CSCF2 can send a NOTIFY to the User Equipment influenced by the failure of the P-CSCF1.

A specific flow in which the first network entity instructs a User Equipment to re-register upon a failure of the HSS or the AS is identical in principle to the above flows and descriptions thereof will be omitted herein.

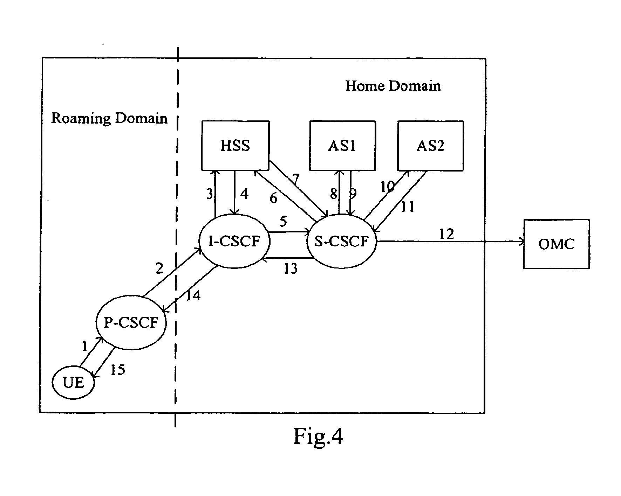

In the notification methods in view of failures of various network devices as described above, the first network entity discovers users influenced by the failure of a network device in accordance with different strategies. A universal method to obtain identifiers of users influenced by a failure of a network device may also be employed. Various network devices involved in the registration of a User Equipment is depicted in Figure 4. In the registration flow, the S-CSCF, acting as a core device providing a registration function for a user, can obtain the addresses of the P-CSCF and the I-CSCF from a SIP request REGISTER upon receipt of a message 5. In the case that a plurality of HSSs present, the S-CSCF can determine through the SLF an accurate address of an HSS in which the corresponding user data is stored. The S-CSCF also performs third-party registration for a user with a related service server in accordance with an initial filtering rule of the user, and therefore the S-CSCF knows addresses of an AS1 and an AS2 related to registration of the user. After finishing all operations related to the registration of the user, the S-CSCF sends to a designated network device a message, which contains the identifier of the user who has registered successfully and information on identifiers of various network devices associated with the registration of the user. In Figure 4, for example, the S-CSCF stores the information in an Operation and Maintenance Center (OMC). Thus, any first network entity in the network can obtain from the OMC the user identifiers of related users influenced by a failure of a network device and further send a notification to these users. The OMC may also be configured with the first network entities corresponding to a second network entity (one second network entity can be provided with a plurality of corresponding first network entities), decide in accordance with the configuration information on whether to permit an interrogation request from the first network entity and decide data to be returned in the corresponding interrogation response. For example, identifiers of all users related to the second network entity are distributed uniformly in various interrogation responses.

In the notification methods in view of failures of various network devices as described above, the IMS network judges in accordance with subscription information on defining a user that the corresponding user shall be notified upon a failure of a related network device, and this is equivalent to default subscription of the user to a corresponding "network device failure" event package, and is an implicit subscription relationship. Alternatively, the User Equipment may send a SUBSCRIBER to the first network entity to subscribe the corresponding "network device failure" event package explicitly upon successful registration. When the related network device fails, the first network entity sends a NOTIFY to the User Equipment according to the existing subscription of the User Equipment.

If the "network device failure" event package is implicitly subscribed to by the user through subscription, when the corresponding network device fails, the first network entity notifies the User Equipment by sending a NOTIFY thereto, and the message body format of the NOTIFY is determined through negotiation between the operator and the mobile terminal.

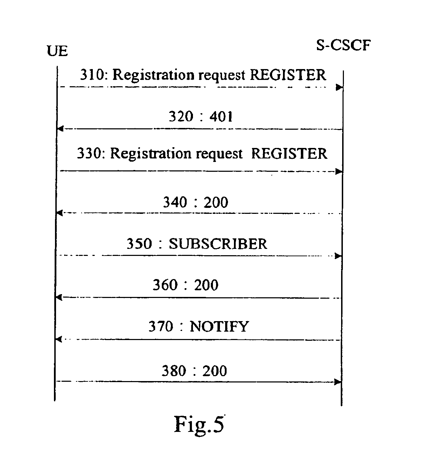

When the first network entity sends in the home domain of the user a NOTIFY to the User Equipment, the existing IMS registration state event notification mechanism can be used in the invention to notify the User Equipment about invalidation of a corresponding registration state, and request the user to reinitiate registration so as to proceed with reception of the service. For details of the user registration state event notification mechanism being used in the IMS network, the IETF RFC3680 (A SIP Event Package for Registrations) and the 3GPP TS24.229 (related descriptions on subscription of the User Equipment and the P-CSCF to a user registration state event, such as the section 5.1.1.3, Initial subscription to the registration-state event package) can be referred to. With reference to Figure 5, a primary processing flow of this mechanism is as follows (the network entities of P-CSCF, I-CSCF, HSS, etc., are omitted).

Steps 310-340: The UE registers successfully with the S-CSCF after passing authentication by the S-CSCF.

Steps 350-360: The UE receives a 200 response to the registration request REGISTER and subscribes to a registration state event package with respect to the identifier of the user who has registers successfully with the S-CSCF. After receiving a 200 response to the SUBSCRIBER, the UE maintains corresponding a Dialog state and a subscription state.

Steps 370-380: If the operator modifies user subscription data because of a certain service requirement, the S-CSCF sends a NOTIFY to a UE to instruct the UE to initiate re-registration. The NOTIFY is sent according to the Dialog state and the subscription state established between the User Equipment and the S-CSCF in the steps 350-360.

When the S-CSCF acts as the first network entity of the HSS or the AS and the HSS or the AS fails, the S-CSCF needs to send to some users who have registered with the S-CSCF a NOTIFY by using the existing mechanism according to the Dialog state and the subscription state established in subscription of the user to the registration state event.

Furthermore, after accepting subscription of the user to the registration state event, the S-CSCF itself maintains the Dialog state and the related subscription state and also stores information on these states at the corresponding first network entity. According to the existing mechanism, when the S-CSCF fails, the corresponding first network entity can send a NOTIFY to the User Equipment according to the stored Dialog state and the subscription state to notify the User Equipment that the corresponding registration state is "deactivated", thereby requesting the User Equipment to initiate re-registration.

With the existing registration state event notification mechanism, it is not necessary to extend the existing protocol in order to enable the network device to instruct the user to re-register. For the failure occurring on the S-CSCF, only the S-CSCF is required of backupping dynamically a little of information on the subscription state of the user onto the corresponding first network entity.

As described above, the first network entity instructs the User Equipment to re-register through explicit subscription of the User Equipment to the "network device failure" event or through subscription of the User Equipment to the registration state event, and upon receipt of a NOTIFY, the UE can match it with its own maintained Dialog state and subscription state (through information of call-id and the like), thereby determining that this NOTIFY is an event ever subscribed to by the UE itself. This NOTIFY is authentic if the subscription to the registration state event is initiated by the UE previously through a secure path, because a third party except an authentic network device may neither obtain related state information on subscription of the user to his own registration state event nor send impersonatively a corresponding NOTIFY. When an IMS network device fails, a NOTIFY is sent to each user only once, and the User Equipment initiates new registration and subscription. Therefore, the NOTIFY intercepted by a third party during transmission to the User Equipment without protection from a secure path would be meaningless.

In the above procedure, when the S-CSCF1 fails, the S-CSCF2 sends a NOTIFY to the User Equipment through the P-CSCF1. A secure path has been established between the UE and the P-CSCF1, and the NOTIFY received by the UE over the secure path is sent from an authentic device in the home domain. Therefore, the UE can initiate a user re-registration process as instructed by the NOTIFY. However, in the case that the P-CSCF1 fails, the secure path established between the UE and the P-CSCF1 is lost. The S-CSCF1 sends a NOTIFY to the UE through the P-CSCF2, and the UE can not determine whether the sender of the NOTIFY is an authentic network device or not, because no secure path is present between the UE and the P-CSCF2.

In the absence of a secure path between a User Equipment and a network device, when receiving a NOTIFY from a first network entity, the UE performs a re-registration operation only if the sender of NOTIFY is authentic to it. As described above, the user can determine whether to accredit the received NOTIFY in accordance with whether the received NOTIFY matches with the Dialog and subscription states maintained by the user. Further, the User Equipment may also authenticate a NOTIFY from the network through the following mechanism.

If a NOTIFY is sent by an S-CSCF, the UE can verify the sender S-CSCF in the following two ways.

1. The network device is authenticated by using the parameter AUTS in AKA authentication.

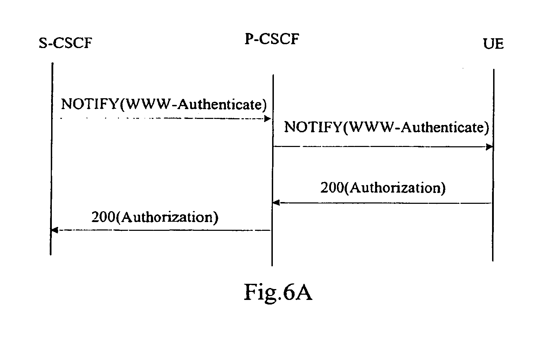

As illustrated in Figure 6A, a header field WWW-Authorization is carried in the NOTIFY sent by the S-CSCF to the user. Dependent upon the stored user authorization information, the parameter *nonce* of the header field WWW-Authorization contains AKA related parameters such as RAND and AUTN. Upon receipt of the NOTIFY containing this header field, the UE can verify the identity of the network device in accordance with the information such as the RAND and the AUTN.

2. The UE performs Digest authentication on the received NOTIFY.

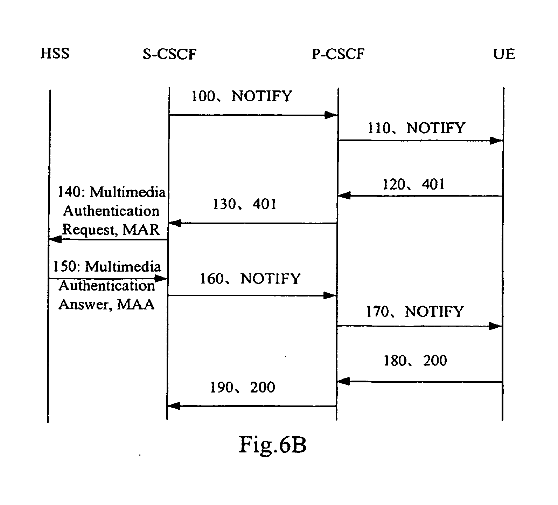

With reference to Figure 6B, the primary flow of this way is as follows.

Steps 100-130: Upon receipt of the NOTIFY, the user responds with a 401 response, to perform Digest identity authentication on the sender of the request. An authentication challenge header field WWW-Authenticate is carried in the 401 response from the UE.

Steps 140-150: Upon receipt of the 401 response, the S-CSCF interacts with the HSS through an MAR/MAA to obtain a value of HA1 required for Digest authentication and calculation of the parameter Response. According to the HA1, the S-CSCF calculates the parameter Response, and generates the header field WWW-Authorization.

Steps 160-190: The header field WWW-Authorization is carried in the NOTIFY sent by the S-CSCF to the UE. After successful authentication, the UE returns a 200 response indicating acceptance of the event notification from the network.

The value of HA1 may also be obtained, before the first NOTIFY is sent, from the HSS by the S-CSCF during the process in which the S-CSCF interacts with the HSS through the SRR/SRA to obtain user subscription information and stored at the S-CSCF.

Further, the User Equipment can accredit a P-CSCF sending a NOTIFY in the following way. This applies to the case that the first network entity sending the NOTIFY is a P-CSCF in the roaming domain. Further, if the User Equipment accredits the P-CSCF sending the NOTIFY, the User Equipment also accredits the S-SCF according to an accreditation passing relationship because the S-CSCF and the P-CSCF accredit each other. Therefore, the following way may also be applicable to authentication on the NOTIFY sent from the S-CSCF.

3. A network device P-CSCF is authenticated with an IP address.

For networking in which no IP address can be impersonated, the UE obtains both address of the P-CSCF1 and address of the P-CSCF2 through a DHCP process while obtaining an IP address. If IP layer networking ensures that no IP address can be impersonated (as required by Early IMS) in an IP network between the UE and the P-CSCF, the UE can determine that the NOTIFY from the P-CSCF2 is from an authentic network device if the UE verifies upon receipt of the NOTIFY that the source IP address of the NOTIFY is the address of the P-CSCF2 obtained in the DHCP process.

4. The network device P-CSCF is authenticated through establishing a TLS connection.

Each P-CSCF is provided with a corresponding digital certificate (the digital certificate is a public key of the P-CSCF which is signed by an issuer). Prior to sending a NOTIFY to the network, the P-CSCF acts as a client and initiates a TLS connection request (ClientHello) to the User Equipment. During subsequent negotiation between the P-CSCF and the User Equipment on TLS connection establishment, the P-CSCF provides the User Equipment with its own digital certificate and therefore is authentic to the User Equipment. A NOTIFY is sent to the User Equipment by the P-CSCF after the TLS connection is established.

The OMA standard organization has defined architecture and protocols to satisfy a demand for device management. In this architecture, User Equipment management, such as automatic update of User Equipment software by the operator, is accomplished through interaction of a Device Management Server (DM Server) and the User Equipment. Generally, the User Equipment may not wait passively for a connection request from the DM server, or may not open a port to wait for a connection from the DM server in view of security. If a device management service flow is triggered by the DM server, the DM server may send a NOTIFY to the User Equipment to instruct the User Equipment to establish on its own initiative a connection to the DM server so as to implement the corresponding device management service. Details of the flow may be obtained with reference to the OMA-TS-DM-Notification-V1_2-20050607-C.

In the invention, the logic function of the first network entity can be implemented by the DM server in this OMA device management architecture, regardless of which type of network entity the second network entity is. Upon perceiving a failure of the second network entity, the DM server determines a user influenced by the failure of the second network entity by interrogating a specific database (e.g. the OMC in which identifiers of users who have registered successfully and identifiers of related network entities are stored, as shown in Figure 4), and sends a NOTIFY to the corresponding User Equipment according to the flow in which the DM server send a notification message to the User Equipment in the existing OMA device management architecture as described above, to request the User Equipment to reinitiate the process of registering with the IMS network. The invention requires an extension to the format of existing notification message "trigger-message". Through the extension, the DM server can instruct the User Equipment to reinitiate registration instead of establishing a device management session with the DM server.

As can be seen from above, the first network entity needs to perceive a failure of a related network device in the invention. Specifically, a failure of a network device can be indicated explicitly through manual issuing of an instruction via a network management interface. In addition, the following method of detecting and notifying of a state of an IMS network device can be used.

1. Detection of a state of an IMS network device

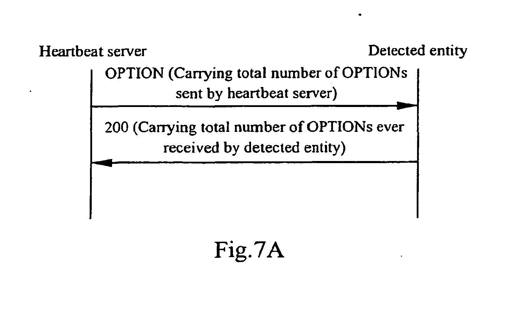

A "heartbeat server", adapted to detect states of various IMS network devices, is provided within an operator network. To detect a state of an S-CSCF, for example, as illustrated in Figure 7A, the heartbeat server sends a SIP request OPTION periodically to the detected S-CSCF, and if a response is returned, it is indicated that the detected S-CSCF is available.

If the S-CSCF restarts immediately after a crash and no detection message OPTION is received from the heartbeat server during the period from the crash to the restarting (in other words, the S-CSCF crashes and restarts in a cycle of sending the OPTION), the heartbeat server may determine by mistake that the detected S-CSCF operates normally. The crash and restarting of the S-CSCF cause all user data to be lost; the heartbeat server shall be able to detect such a state. Therefore in the invention, a counter is provided between the heartbeat server and the detected entity to count the number of OPTION messages. If the heartbeat server receives a 200 response which carries an OPTION counter with a count equal to the number of OPTIONs sent to the detected entity by the heartbeat server, it is indicated that the detected entity operates normally. If the heartbeat server receives no corresponding 200 response within a prescribed period of time after sending an OPTION, it is indicated that the detected entity is crashed.

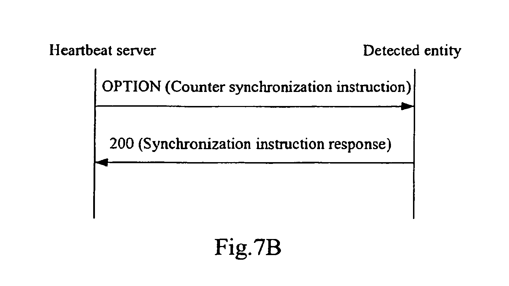

If the detected entity restarts after a crash, the heartbeat server receives a 200 response carrying a counter with a value of 0, and determines that the detected entity has restarted after a crash. Upon detecting that the detected entity restarts after a crash, the heartbeat server sends a request OPTION carrying a "counter synchronization instruction", instructing to synchronize the counters as illustrated in Figure 7B.

The above detection method may also be applied to detecting and monitoring of a state at a service processing board level internal to an IMS network device.

2. IMS network device state subscription/notification mechanism

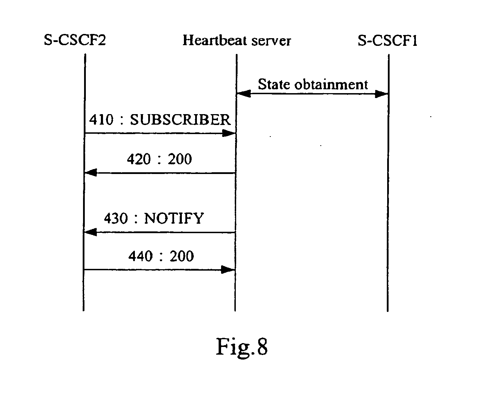

The heartbeat server stores a state of the S-CSCF1 and acts as a Presence Server providing a subscription service. Another network device such as the S-CSCF2 may obtain the state of the S-CSCF1 from the heartbeat server through subscription. As illustrated in Figure 8, in steps 410-420, the S-CSCF2 subscribes to a state of the S-CSCF1 from the heartbeat server, and in steps 430-440, the heartbeat server sends a notification message to the S-CSCF2 upon detection that the state of the S-CSCF1 is changed from "normal" to "invalidation".

If a subscribing entity and a subscribed entity belong to different operators, an operator may not allow, in some situations, a network device which does not belong to the same domain as a network device of the operator to obtain a related state of the network device, which may be implemented by setting a subscription rule at the heartbeat server.

Within an operator, an I-CSCF may also obtain available states of various S-CSCFs in the same domain as the I-CSCF by subscription. Therefore, state information of the S-CSCFs can be applied directly in selection of an S-CSCF, without trying another S-CSCF after a message is retransmitted with failure.

With the above state detection and subscription notification methods, the first network entity may discover automatically a change of a state of a related network device. Alternatively, a state of the network device can be detected by the heartbeat server; the detected state can be referred to by network maintenance personal and serve as a basic of whether to issue a manual instruction. For example, the network maintenance personal may need to confirm whether a failure is due to a temporary problem in network line connection.

In light of the above descriptions, it will be appreciated to those ordinarily skilled in the art that the implementation in the case that a network entity other than the S-CSCF and the P-CSCF in the network acts as the first network entity is similar to the above implementation, descriptions of which are omitted herein.

Apparently, those skilled in the art can make various modifications and variations to the invention without departing from the scope of the invention. Therefore, the invention is intended to encompass all these modifications and variations falling within the scope of the appended claims of the invention and equivalents thereof.

## Claims

1. A method for implementing IP Multimedia Subsystem, IMS network reliability, comprising:
perceiving, by a first network entity in an IMS network, whether a second network entity in which user registration related data is stored fails; and
instructing, by the first network entity, a registered user related to the failed second network entity to re-register in response to perceiving a failure of the second network entity.

2. The method according to claim 1, wherein the first network entity instructs a User Equipment to re-register through a registration state event package subscribed to by the User Equipment upon successful registration, during registration of a user, an identifier of the user and an identifier of the second network entity are associated and stored at a designated network entity; and the first network entity determines the registered user related to the failed second network entity through the designated network entity and issues a notification to the registered user, to request the registered user to re-register; or
wherein a User Equipment subscribes to a state of the second network entity from the first network entity, which instructs the User Equipment to re-register in accordance with the maintained subscription relationship upon perceiving the failure of the second network entity, the subscription relationship comprises an implicit subscription relationship, during registration of a user, an identifier of the user and an identifier of the second network entity are associated and stored at a designated network entity, and the first network entity determines the registered user related to the failed second network entity through the designated network entity and issues a notification to the registered user, to request the registered user to re-register.

3. The method according to claim 1, wherein whether the second network entity fails is detected manually, and when the second network entity is determined as failed, a command is issued to notify the first network entity of the failure; or
the first network entity perceives whether the second network entity fails through subscribing to a state of the second network entity from a heartbeat server in the IMS network which detects a state of the second network entity.

4. The method according to claim 1, wherein the registered user subscribes to a state of the second network entity from the first network entity, which instructs the registered user to re-register in accordance with the maintained subscription relationship upon perceiving the failure of the second network entity.

5. The method according to claim 4, wherein the subscription relationship comprises an implicit subscription relationship.

6. The method according to claim 1, wherein the first network entity instructs the registered user to re-register through a registration state event package subscribed to by the registered user upon successful registration.

7. The method according to claim 4 or 6, wherein, upon receipt of the notification message, the registered user further matches the notification message with subscription state maintained by the registered user to determine whether the message is authentic and initiates re-registration upon determination that the notification message is authentic.

8. The method according to claim 1, 3, 4, 5 or 6, wherein the registered user upon receipt of a re-registration notification message verifies a source address of the notification message with an address of a P-CSCF obtained in advance to determine whether the notification message is authentic and initiates re-registration with the network upon determination that the notification message is authentic.

9. The method according to claim 1, 3, 4, 5 or 6, wherein the registered user upon receipt of a re-registration notification message carries an authentication challenge in a response message, a network entity sending the notification message generates a corresponding authentication answer in accordance with the authentication challenge and sends the authentication answer to the registered user, which verifies the authentication answer to determine whether the notification message is authentic and initiates re-registration with the network upon determination that the notification message is authentic.

10. The method according to claim 1, wherein the first network entity is a device management server in an OMA device management architecture and the device management server sends an extended notification message to instruct the registered user to reinitiate registration.

11. The method according to claim 1, wherein the second network entity comprises a Proxy-Call Session Control Function, P-CSCF; the first network entity is an S-CSCF, and an identifier of the P-CSCF and identifiers of related users are associated and stored at the S-CSCF; and the S-CSCF instructs the related users to re-register upon perceiving a failure of the P-CSCF.

12. The method according to claim 11, wherein a notification message sent by the S-CSCF is transported to the registered user through another P-CSCF, and an identifier of the another P-CSCF is carried to the S-CSCF during registration of the user and stored by the S-CSCF.

13. The method according to claim 1, wherein the second network entity comprises a P-CSCF; the first network entity is another P-CSCF; and during registration of a user, an identifier of the P-CSCF and an identifier of the related user are associated and stored at the another P-CSCF, which instructs the influenced user to re-register upon a failure of the P-CSCF.

14. The method according to claim 1, wherein the second network entity comprises an S-CSCF, and when the S-CSCF fails, the first network entity instructs the user to re-register through a P-CSCF which serves the user during registration of the user.

15. The method according to claim 14, wherein the first network entity is another S-CSCF; during registration of the user, an identifier of the user, identifier information of the P-CSCF serving the user and an identifier of the S-CSCF are associated and stored at a Home Subscriber Server, HSS; and the another S-CSCF perceives the related user and the P-CSCF serving the user from the HSS in accordance with the identifier information of the S-CSCF.

16. The method according to claim 1, wherein the second network entity comprises an HSS; and the first network entity is an S-CSCF; upon perceiving a failure of the HSS, the S-CSCF instructs a user who has registered with the HSS to re-register through a P-CSCF which serves the user during registration of the user.

17. The method according to claim 1, wherein the second network entity comprises an Application Server, AS, and the first network entity instructs the user to re-register through a P-CSCF which serves the user during registration of the user upon a failure of the AS.

18. The method according to claim 18, wherein the first network entity is an S-CSCF.

19. A system for implementing IMS network reliability, comprising a first network entity and a second network entity, wherein
the first network entity is configured to perceive whether the second network entity fails, and instruct a registered user related to the failed second network entity to re-register in response to perceiving a failure of the second network entity; and
the second network entity is configured to store user registration related data.

20. The system according to claim 19, further comprising a designated network entity, which is configured to associate and store an identifier of the user and an identifier of the second network entity; and
the first network entity is further configured to determine the registered user related to the failed second network entity through the designated network entity and issue a notification to the registered user, to request the registered user to re-register.

21. The system according to claim 19, further comprising a heartbeat server, which is configured to detect a state of the second network entity, and
the first network entity is further configured to perceive whether the second network entity fails through subscribing to the state of the second network entity from the heartbeat server.

22. The system according to claim 21, wherein the heartbeat server and the second network entity are configured to count sent and received SIP messages respectively, the second network entity is further configured to carry a count result in a response message to the heartbeat server, and the heartbeat server, is further configured to compare the count result with that of the heartbeat server to determine whether the state of the second network entity changes.

23. The system according to claim 19, wherein a state of the second network entity are subscribed by the user from the first network entity, and the first network entity is further configured to instruct the user to re-register in accordance with the maintained subscription relationship upon perceiving the failure of the second network entity.

## Patentansprüche

1. Verfahren zum Implementieren der Netzwerk-Zuverlässigkeit von IP-Multimedia-Subsystemen, IMS, umfassend:
Erkennen, durch eine erste Netzwerk-Einheit in einem IMS-Netzwerk, ob eine zweite Netzwerk-Einheit, in der auf die User-Registrierung bezogene Daten gespeichert sind, versagt; und
auf das Erkennen eines Versagens der zweiten Netzwerk-Einheit hin, durch die erste Netzwerk-Einheit erfolgendes Auffordern eines mit der versagenden zweiten Netzwerk-Einheit in Bezug stehenden registrierten Users, sich erneut zu registrieren.

2. Verfahren nach Anspruch 1, bei dem die erste Netzwerk-Einheit ein User Equipment auffordert, sich durch ein Registrierungs-Zustands-Event-Paket, das durch das User Equipment bei erfolgreicher Registrierung subskribiert wird, erneut zu registrieren, während der Registrierung eines Users eine Identifikation des Users und eine Identifikation der zweiten Netzwerk-Einheit zugeordnet werden und an einer bezeichneten Netzwerk-Einheit gespeichert werden und die erste Netzwerk-Einheit den mit der versagenden zweiten Netzwerk-Einheit in Bezug stehenden registrierten User durch die bezeichnete Netzwerk-Einheit bestimmt und an den registrierten User eine Meldung ausgibt, um den registrierten User aufzufordern, sich erneut zu registrieren; oder bei dem ein User Equipment einen Zustand der zweiten Netzwerk-Einheit aus der ersten Netzwerk-Einheit subskribiert, wodurch das User Equipment aufgefordert wird, sich entsprechend der aufrechterhaltenen Subskriptions-Beziehung erneut zu registrieren, wenn das Versagen der zweiten Netzwerk-Einheit erkannt wird, die Subskriptions-Beziehung eine implizite Subskriptions-Beziehung umfasst, während der Registrierung eines Users eine Identifikation des Users und eine Identifikation der zweiten Netzwerk-Einheit zugeordnet werden und an einer bezeichneten Netzwerk-Einheit gespeichert werden und die erste Netzwerk-Einheit den mit der versagenden zweiten Netzwerk-Einheit in Bezug stehenden registrierten User durch die bezeichnete Netzwerk-Einheit bestimmt und an den registrierten User eine Meldung ausgibt, um den registrierten User aufzufordern, sich erneut zu registrieren.

3. Verfahren nach Anspruch 1, bei dem manuell detektiert wird, ob die zweite Netzwerk-Einheit versagt, und, wenn ein Versagen der zweiten Netzwerk-Einheit bestimmt wird, ein Befehl ausgegeben wird, der ersten Netzwerk-Einheit das Versagen zu melden; oder
die erste Netzwerk-Einheit durch Subskribieren eines Zustands der zweiten Netzwerk-Einheit aus einem in dem IMS-Netzwerk befindlichen Heartbeat-Server, der einen Zustand der zweiten Netzwerk-Einheit detektiert, erkennt, ob die zweite Netzwerk-Einheit versagt.

4. Verfahren nach Anspruch 1, bei dem der registrierte User einen Zustand der zweiten Netzwerk-Einheit aus der ersten Netzwerk-Einheit subskribiert, der bei Erkennen des Versagens der zweiten Netzwerk-Einheit den registrierten User auffordert, sich entsprechend der aufrechterhaltenen Subskriptions-Beziehung erneut zu registrieren.

5. Verfahren nach Anspruch 4, bei dem die Subskriptions-Beziehung eine implizite Subskriptions-Beziehung umfasst.

6. Verfahren nach Anspruch 1, bei dem die erste Netzwerk-Einheit den registrierten User auffordert, sich durch ein Registrierungs-Zustands-Event-Paket, das durch den registrierten User bei erfolgreicher Registrierung subskribiert wird, erneut zu registrieren.

7. Verfahren nach Anspruch 4 oder 6, bei dem bei Empfang der Aufforderungs-Meldung der registrierte User ferner die Aufforderungs-Meldung mit dem von dem registrierten User aufrechterhaltenen Subskriptions-Zustand abgleicht, um zu bestimmen, ob die Meldung authentisch ist, und bei Bestimmung der Authentizität der Aufforderungs-Meldung die Neuregistrierung initiiert.

8. Verfahren nach Anspruch 1, 3, 4, 5 oder 6, bei dem der registrierte User bei Empfang einer Neuregistrierungs-Aufforderungs-Meldung eine Source-Adresse der Aufforderungs-Meldung anhand einer im Voraus erhaltenen Adresse einer P-CSCF verifiziert, um zu bestimmen, ob die Aufforderungs-Meldung authentisch ist, und bei Bestimmung der Authentizität der Aufforderungs-Meldung die Neuregistrierung mit dem Netzwerk initiiert.

9. Verfahren nach Anspruch 1, 3, 4, 5 oder 6, bei dem der registrierte User bei Empfang einer Neuregistrierungs-Aufforderungs-Meldung eine Authentizitäts-Infragestellung in einer Antwort-Meldung übermittelt, wobei eine Netzwerk-Einheit, welche die Aufforderungs-Meldung sendet, eine entsprechende Authentizitäts-Antwort entsprechend der Authentizitäts-Infragestellung generiert und die Authentizitäts-Antwort an den registrierten User sendet, der die Authentizitäts-Antwort verifiziert, um zu bestimmen, ob die Aufforderungs-Meldung authentisch ist und bei Bestimmung der Authentizität der Aufforderungs-Meldung die Neuregistrierung mit dem Netzwerk initiiert.

10. Verfahren nach Anspruch 1, bei dem die erste Netzwerk-Einheit ein Device-Management-Server in einer OMA-Device-Management-Architektur ist und der Device-Management-Server eine erweiterte Aufforderungs-Meldung sendet, um den registrierten User zum Neu-Initiieren der Registrierung aufzufordern.

11. Verfahren nach Anspruch 1, bei dem die zweite Netzwerk-Einheit eine Proxy-Call Session Control Function, P-CSCF, umfasst; die erste Netzwerk-Einheit eine S-CSCF ist, und eine Identifikation der P-CSCF und Identifikationen beziehungsmäßig zugehöriger User zugeordnet und an der S-CSCF gespeichert werden; und die S-CSCF bei Erkennen eines Versagens der P-CSCF die beziehungsmäßig zugehörigen User auffordert, sich erneut zu registrieren.

12. Verfahren nach Anspruch 11, bei dem eine von der S-CSCF gesendete Aufforderungs-Meldung durch eine weitere P-CSCF an den registrierten User übermittelt wird, und eine Identifikation der weiteren P-CSCF während der Registrierung des Users an die S-CSCF übermittelt wird und durch die S-CSCF gespeichert wird.

13. Verfahren nach Anspruch 1, bei dem die zweite Netzwerk-Einheit eine P-CSCF umfasst; die erste Netzwerk-Einheit eine weitere P-CSCF ist; und während der Registrierung eines Users eine Identifikation der P-CSCF und eine Identifikation des beziehungsmäßig zugehörigen Users zugeordnet und an der weiteren P-CSCF gespeichert werden, die den betroffenen User bei Versagen der P-CSCF auffordert, sich erneut zu registrieren.

14. Verfahren nach Anspruch 1, bei dem die zweite Netzwerk-Einheit eine S-CSCF umfasst, und bei Versagen der S-CSCF die erste Netzwerk-Einheit den User auffordert, sich durch eine P-CSCF, die den User während der Registrierung des Users bedient, erneut zu registrieren.

15. Verfahren nach Anspruch 14, bei dem die erste Netzwerk-Einheit eine weitere S-CSCF ist; während der Registrierung des Users eine Identifikation des Users, Identifikationsinformation der P-CSCF, die den User bedient, und eine Identifikation der S-CSCF zugeordnet und in einem Home Subscriber Server HSS gespeichert werden; und die weitere S-CSCF den beziehungsmäßig zugehörigen User und die P-CSCF, die den User aus dem HSS bedient, entsprechend der Identifikationsinformation aus der S-CSCF erkennt.

16. Verfahren nach Anspruch 1, bei dem die zweite Netzwerk-Einheit einen HSS umfasst; und die erste Netzwerk-Einheit eine S-CSCF ist; bei Erkennen eines Versagens des HSS die S-CSCF einen User, der sich bei dem HSS registriert hat, auffordert, sich durch eine P-CSCF, die den User während der Registrierung des Users bedient, erneut zu registrieren.

17. Verfahren nach Anspruch 1, bei dem die zweite Netzwerk-Einheit einen Application Server, AS, umfasst und die erste Netzwerk-Einheit bei Versagen des AS den User auffordert, sich durch eine P-CSCF, die den User während der Registrierung des Users bedient, erneut zu registrieren.

18. Verfahren nach Anspruch 18, bei dem die erste Netzwerk-Einheit eine S-CSCF ist.

19. System zum Implementieren der Netzwerk-Zuverlässigkeit von IMS, umfassend eine erste Netzwerk-Einheit und eine zweite Netzwerk-Einheit, bei dem die erste Netzwerk-Einheit derart konfiguriert ist, dass sie erkennt, ob die zweite Netzwerk-Einheit versagt, und auf das Erkennen eines Versagens der zweiten Netzwerk-Einheit hin einen mit der versagenden zweiten Netzwerk-Einheit in Bezug stehenden registrierten User auffordert, sich erneut zu registrieren; und
die zweite Netzwerk-Einheit zum Speichern auf die User-Registrierung bezogener Daten konfiguriert ist.

20. System nach Anspruch 19, ferner umfassend eine bezeichnete Netzwerk-Einheit, die derart konfiguriert ist, dass sie eine Identifikation des Users und eine Identifikation der zweiten Netzwerk-Einheit zuordnet und speichert; und
wobei die erste Netzwerk-Einheit ferner derart konfiguriert ist, dass sie den mit der versagenden zweiten Netzwerk-Einheit in Bezug stehenden registrierten User durch die bezeichnete Netzwerk-Einheit bestimmt und an den registrierten User eine Meldung ausgibt, um den registrierten User aufzufordern, sich erneut zu registrieren.

21. System nach Anspruch 19, ferner umfassend einen Heartbeat-Server, der zum Detektieren eines Zustands der zweiten Netzwerk-Einheit konfiguriert ist, und wobei die erste Netzwerk-Einheit ferner derart konfiguriert ist, dass sie, indem sie den Zustand der zweiten Netzwerk-Einheit aus dem Heartbeat-Server subskribiert, erkennt, ob die zweite Netzwerk-Einheit versagt.

22. System nach Anspruch 21, bei dem der Heartbeat-Server und die zweite Netzwerk-Einheit zum Zählen gesendeter bzw. empfangener SIP-Meldungen konfiguriert sind, die zweite Netzwerk-Einheit ferner zum Übermitteln eines Zähl-Ergebnisses in einer Antwort-Meldung an den Heartbeat-Server konfiguriert ist und der Heartbeat-Server ferner zum Vergleichen des Zähl-Ergebnisses mit demjenigen des Heartbeat-Servers konfiguriert ist, um zu bestimmen, ob sich der Zustand der zweiten Netzwerk-Einheit verändert.

23. System nach Anspruch 19, bei dem ein Zustand der zweiten Netzwerk-Einheit durch den User aus der ersten Netzwerk-Einheit subskribiert wird, und die erste Netzwerk-Einheit ferner derart konfiguriert ist, dass sie beim Erkennen des Versagens der zweiten Netzwerk-Einheit den User entsprechend der aufrechterhaltenen Subskriptions-Beziehung auffordert, sich erneut zu registrieren.

## Revendications

1. Procédé pour obtenir une fiabilité de réseau de sous-système multimédia IP, IMS, consistant à :
percevoir, au moyen d'une première entité de réseau dans un réseau IMS, si une deuxième entité de réseau dans laquelle des données associées à un enregistrement d'utilisateur sont mémorisées est défaillante ; et
ordonner, au moyen de la première entité de réseau, à un utilisateur enregistré associé à la deuxième entité de réseau défaillante de se réenregistrer en réponse à la perception d'une défaillance de la deuxième entité de réseau.

2. Procédé selon la revendication 1, dans lequel la première entité de réseau ordonne à un Equipement d'Utilisateur de se réenregistrer par l'intermédiaire d'un forfait d'événements d'état d'enregistrement auquel s'est abonné l'Equipement d'Utilisateur lors d'un enregistrement réussi, pendant l'enregistrement d'un utilisateur, un identifiant de l'utilisateur et un identifiant de la deuxième entité de réseau sont associés et mémorisés dans une entité de réseau désignée, et la première entité de réseau détermine l'utilisateur enregistré associé à la deuxième entité de réseau défaillante par l'intermédiaire de l'entité de réseau désignée et émet une notification vers l'utilisateur enregistré, pour demander à l'utilisateur enregistré de se réenregistrer ; ou
dans lequel un Equipement d'Utilisateur s'abonne à un état de la deuxième entité de réseau depuis la première entité de réseau, qui ordonne à l'Equipement d'Utilisateur de se réenregistrer conformément à la relation d'abonnement conservée lors de la perception de la défaillance de la deuxième entité de réseau, la relation d'abonnement comprend une relation d'abonnement implicite, pendant l'enregistrement d'un utilisateur, un identifiant de l'utilisateur et un identifiant de la deuxième entité de réseau sont associés et mémorisés dans une entité de réseau désignée, et la première entité de réseau détermine l'utilisateur enregistré associé à la deuxième entité de réseau défaillante par l'intermédiaire de l'entité de réseau désignée et émet une notification vers l'utilisateur enregistré, pour demander à l'utilisateur enregistré de se réenregistrer.

3. Procédé selon la revendication 1, dans lequel il est détecté manuellement si la deuxième entité de réseau est défaillante, et lorsqu'il est déterminé que la deuxième entité de réseau est défaillante, une commande est émise pour informer la première entité de réseau de la défaillance ; ou la première entité de réseau perçoit si la deuxième entité de réseau est défaillante par un abonnement à un état de la deuxième entité de réseau auprès d'un serveur d'envoi de battements de coeur sur le réseau IMS qui détecte un état de la deuxième entité de réseau.

4. Procédé selon la revendication 1, dans lequel l'utilisateur enregistré s'abonne à un état de la deuxième entité de réseau auprès de la première entité de réseau, qui ordonne à l'utilisateur enregistré de se réenregistrer selon la relation d'abonnement maintenue lors de la perception de la défaillance de la deuxième entité de réseau.

5. Procédé selon la revendication 4, dans lequel la relation d'abonnement comprend une relation d'abonnement implicite.

6. Procédé selon la revendication 1, dans lequel la première entité de réseau ordonne à l'utilisateur enregistré de se réenregistrer par l'intermédiaire d'un ensemble d'événements d'états d'enregistrement souscrit par l'utilisateur enregistré lors d'un enregistrement réussi.

7. Procédé selon la revendication 4 ou 6, dans lequel, lors de la réception du message de notification, l'utilisateur enregistré adapte en outre le message de notification à un état d'abonnement maintenu par l'utilisateur enregistré pour déterminer si le message est authentique et lance un réenregistrement lorsqu'il est déterminé que le message de notification est authentique.

8. Procédé selon la revendication 1, 3, 4, 5 ou 6, dans lequel l'utilisateur enregistré, lors de la réception d'un message de notification de réenregistrement, vérifie une adresse d'origine du message de notification avec une adresse d'un P-CSCF obtenue à l'avance pour déterminer si le message de notification est authentique et lance un réenregistrement auprès du réseau lorsqu'il est déterminé que le message de notification est authentique.

9. Procédé selon la revendication 1, 3, 4, 5 ou 6, dans lequel l'utilisateur enregistré, lors d'une réception d'un message de notification de réenregistrement, transporte une demande d'authentification dans un message de réponse, une entité de réseau envoyant le message de notification génère une réponse d'authentification correspondante conformément à la demande d'authentification et envoie la réponse d'authentification à l'utilisateur enregistré, qui vérifie la réponse d'authentification pour déterminer si le message de notification est authentique et lance un réenregistrement auprès du réseau lorsqu'il est déterminé que le message de notification est authentique.

10. Procédé selon la revendication 1, dans lequel la première entité de réseau est un serveur de gestion de dispositif dans une architecture de gestion de dispositif OMA et le serveur de gestion de dispositif envoie un message de notification étendu pour ordonner à l'utilisateur enregistré de relancer un enregistrement.

11. Procédé selon la revendication 1, dans lequel la deuxième entité de réseau comprend une fonction de commande de session d'appel de mandataire P-CSCF ; la première entité de réseau est un S-CSCF, et un identifiant du P-CSCF et les identifiants d'utilisateurs associés sont associés et mémorisés dans le S-CSCF ; et le S-CSCF ordonne aux utilisateurs associés de se réenregistrer lorsqu'une défaillance du P-CSCF est perçue.

12. Procédé selon la revendication 11, dans lequel un message de notification envoyé par le S-CSCF est transporté vers l'utilisateur enregistré par l'intermédiaire d'un autre P-CSCF, et un identifiant dudit autre P-CSCF est transporté vers le S-CSCF pendant un enregistrement de l'utilisateur et mémorisé par le S-CSCF.

13. Procédé selon la revendication 1, dans lequel la deuxième entité de réseau comprend un P-CSCF ; la première entité de réseau est un autre P-CSCF ; et pendant l'enregistrement d'un utilisateur, un identifiant du P-CSCF et un identifiant de l'utilisateur associé sont associés et mémorisés dans ledit autre P-CSCF, lequel ordonne à l'utilisateur influencé de se réenregistrer lors d'une défaillance du P-CSCF.

14. Procédé selon la revendication 1, dans lequel la deuxième entité de réseau comprend un S-CSCF, et lorsque le S-CSCF est défaillant, la première entité de réseau ordonne à l'utilisateur de se réenregistrer par l'intermédiaire d'un P-CSCF qui dessert l'utilisateur pendant l'enregistrement de l'utilisateur.

15. Procédé selon la revendication 14, dans lequel la première entité de réseau est un autre S-CSCF ; pendant un enregistrement de l'utilisateur, un identifiant de l'utilisateur, les informations d'identifiant du P-CSCF desservant l'utilisateur et un identifiant du S-CSCF sont associés et mémorisés dans un serveur d'abonné nominal, HSS ; et ledit autre S-CSCF perçoit l'utilisateur associé et le P-CSCF desservant l'utilisateur à partir du HSS conformément aux informations d'identifiant du S-CSCF.

16. Procédé selon la revendication 1, dans lequel la deuxième entité de réseau comprend un HSS ; et la première entité de réseau est un S-CSCF ; lors de la perception d'une défaillance du HSS, le S-CSCF ordonne à un utilisateur qui s'est enregistré auprès du HSS de se réenregistrer par l'intermédiaire d'un P-CSCF qui dessert l'utilisateur pendant l'enregistrement de l'utilisateur.

17. Procédé selon la revendication 1, dans lequel la deuxième entité de réseau comprend un serveur d'application, AS, et la première entité de réseau ordonne à l'utilisateur de se réenregistrer par l'intermédiaire d'un P-CSCF qui dessert l'utilisateur pendant l'enregistrement de l'utilisateur lors d'une défaillance du serveur d'application.

18. Procédé selon la revendication 18, dans lequel la première entité de réseau est un S-CSCF.

19. Système pour obtenir une fiabilité de réseau IMS, comprenant une première entité de réseau et une deuxième entité de réseau, dans lequel la première entité de réseau est configurée pour percevoir si la deuxième entité de réseau est défaillante, et pour ordonner à un utilisateur enregistré associé à la deuxième entité de réseau défaillante de se réenregistrer en réponse à la perception d'une défaillance de la deuxième entité de réseau ; et la deuxième entité de réseau est configurée pour mémoriser des données associées à un enregistrement d'utilisateur.

20. Système selon la revendication 19, comprenant en outre une entité de réseau désignée, qui est configurée pour associer et mémoriser un identifiant de l'utilisateur et un identifiant de la deuxième entité de réseau ; et la première entité de réseau est en outre configurée pour déterminer l'utilisateur enregistré associé à la deuxième entité de réseau défaillante par l'intermédiaire de l'entité de réseau désignée et pour émettre une notification vers l'utilisateur enregistré, pour demander à l'utilisateur enregistré de se réenregistrer.

21. Système selon la revendication 19, comprenant en outre un serveur d'envoi de battements de coeur, qui est configuré pour détecter un état de la deuxième entité de réseau, et la première entité de réseau est en outre configurée pour percevoir si la deuxième entité de réseau est défaillante par un abonnement à l'état de la deuxième entité de réseau auprès du serveur d'envoi de battements de coeur.

22. Système selon la revendication 21, dans lequel le serveur d'envoi de battements de coeur et la deuxième entité de réseau sont configurés pour compter les messages SIP envoyés et reçus, respectivement, la deuxième entité de réseau est en outre configurée pour transporter un résultat de comptage dans un message de réponse vers le serveur d'envoi de battements de coeur, et le serveur d'envoi de battements de coeur est en outre configuré pour comparer le résultat de comptage avec celui du serveur d'envoi de battements de coeur pour déterminer si l'état de la deuxième entité de réseau change.

23. Système selon la revendication 19, dans lequel l'utilisateur de la première entité de réseau est abonné à un état de la deuxième entité de réseau, et la première entité de réseau est en outre configurée pour ordonner à l'utilisateur de se réenregistrer selon la relation d'abonnement maintenue lorsque la défaillance de la deuxième entité de réseau est perçue.
